# EUROPEAN PATENT APPLICATION

(11) **EP 2 388 185 A2**
(43) Date of publication of application: **23.11.2011**
(21) Application number: 11380014.8
(22) Date of filing: 28.02.2011
(51) Int. Cl.: B62D 35/00, B60J 5/06

(54) **Device for improving the aerodynamic coefficient of semi-trailers, trucks and container boxes with canvas sides**

(30) Priority: 19.05.2010 ES 201030498 U
(71) Applicant: Guillén Desarrollos Industriales S.L.U., 46230 Alginet Valencia (ES)
(72) Inventor: Guillén Garulo, José Luis, 46230 Alginet (Valencia) (ES)
(74) Representative: Ungria Lopez, Javier

(57) **Abstract**

Device for improving the aerodynamic coefficient applicable to semi-trailers canvas, truck and containers boxes, including vertical-tension mechanisms arranged in alignment on both sides of the canvas covering the box of a truck, semi-trailer and container, characterized in that it comprises lamellar bodies (1-1') that cover and conceal the vertical-tension mechanisms (4) making up a smooth surface that follows the outer surface of the sides of the canvas (2), such lamellar bodies (1-1') being fixed to the canvas (2) through anchoring means.

## Description

### OBJECT OF THE INVENTION

The present invention, as this specification states in its title, relates to a device for improving the aerodynamic coefficient applicable to semi-trailer canvas, truck and container boxes designed to cover a series of vertical-tension mechanisms from a canvas of a truck, semi-trailer or container box, such mechanisms arranged at the bottom at longitudinal alignments along both sides of the canvas in proximity to the longitudinal edges of the base of such truck, semi-trailer and container box.

By incorporating the device of the invention, a smooth surface along the vertical-tension mechanisms concealing thereof is obtained, preventing the mentioned vertical-tension mechanisms from opposing resistance to the air, during driving the truck, due to the concealment thereof, wherewith a fuel saving is achieved by preventing air perpendicular impact against such vertical-tension mechanisms and therefore a better aerodynamic coefficient.

### BACKGROUND OF THE INVENTION

Currently there are truck boxes that include canvas to protect the product load being conveyed, the tension of such canvas being secured through vertical-tension mechanisms arranged in two longitudinal alignments of both side faces of the truck box in proximity to the longitudinal edges of such truck box.

These vertical-tension mechanisms properly tight the canvas ensuring its stability and correct positioning, especially while driving the truck.

However, the vertical-tension mechanisms protrude outside the outer surface of the canvas, whereby the air perpendicularly impacts, during driving the truck, against such vertical-tension mechanisms increasing the aerodynamic coefficient with a consequent increase in fuel consumption.

Thus, all vertical-tension mechanisms arranged on the sides of the truck box offer flat surfaces arranged perpendicular to the direction of the vehicle motion, as well as other elements that collide with the air produced by the vehicle movement, it slowing by the high aerodynamic coefficient produced by the assembly of each of said vertical-tension mechanisms.

### DESCRIPTION OF THE INVENTION

In order to achieve the objectives and avoid the drawbacks mentioned in the preceding paragraphs, the invention proposes a device for improving the aerodynamic coefficient applicable to semi-trailers canvas, truck and containers boxes characterized in that it comprises lamellar bodies fixed against the sides of the canvas itself concealing some vertical-tension mechanisms of the canvas arranged at the bottom at longitudinal alignments in proximity to the longitudinal edges of the base of the truck, semi-trailer and container box, so that the incorporation of the lamellar bodies provides a smooth surface as the continuation of the smooth surface of the side faces of the canvas, wherewith the perpendicular incidence of the air against the vertical-tension mechanisms is completely eliminated, thus improving the aerodynamic coefficient and as a consequent thereof a significant fuel saving of the corresponding vehicle. Other lamellar teddies can also conceal other vertical tension mechanisms vertically arranged on the end areas of the canvas sides.

The characteristic lamellar bodies concealing the two series of vertical-tension mechanisms are fixed to the canvas through anchoring means, such as adhering fabric strips, by sewing, brackets, heat welding, gluing, so including but not limited to any adhesion system.

Another feature of the invention is that in a possible embodiment, the lamellar bodies comprise an anterior portion that is bent at right angle for anchoring against an area of the front wall of the truck, semi-trailer and container box, thus ensuring more firmly the fixation of the lamellar bodies through their anterior area on which the air impacts with greater force while driving truck.

Next, to facilitate a better understanding of this specification and being an integral part thereof, some figures wherein the object of the invention has been represented in an illustrative and not limitative manner, are attached.

### BRIEF DESCRIPTION OF THE DRAWINGS

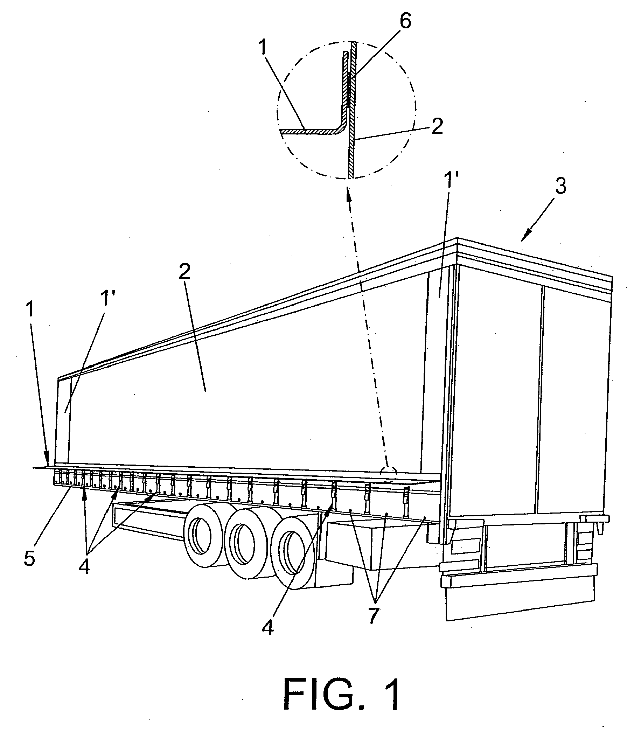

Figure 1.- Shows a perspective view of a truck box that includes a canvas to protect the load being conveyed therein, including a device for improving the aerodynamic coefficient applicable to semi-trailer canvas, truck and container boxes object of the invention. It basically comprises some lamellar bodies in active position of which these conceal all the vertical-tension mechanisms of the canvas.

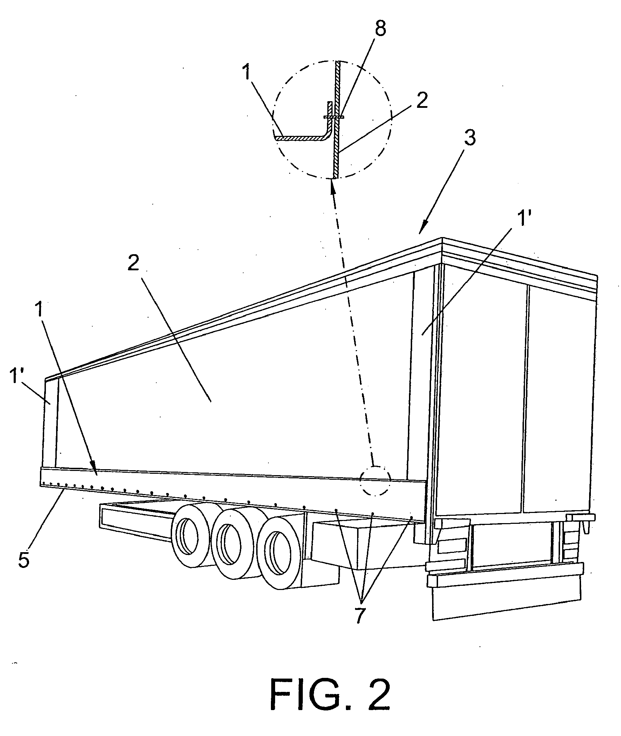

Figure 2.- Shows a perspective view of the truck box, wherein the vertical-tension mechanisms of the canvas are concealed under the device of the invention.
Figure 3.- Shows a plan view wherein can be seen that the lamellar bodies concealing the vertical-tension mechanisms include a characteristic anterior portion that is fixed on the front wall of the truck box.

### DESCRIPTION OF THE PREFERRED EMBODIMENT

Considering the numbering adopted in the figures, the device of the invention is determined from some lamellar bodies 1 which are in principle arranged at the bottom of the sides of the canvas itself 2 covering the truck box 3 to protect the products to be conveyed, into which bottom a series of vertical-tension mechanisms 4 for tightening the canvas 2 are located, and which are horizontally arranged in proximity to the longitudinal edges 5 of the base of the truck box 3 wherein such vertical-tension mechanisms 4 are hooked.

These mechanisms could also be included in vertical directions close to the end zones of the canvas sides, other lamellar bodies 1' being arranged in correspondence with such mechanisms.

The mentioned lamellar bodies 1-1' conceal the vertical-tension mechanisms 4 providing a smooth surface that follows the smooth surface of the canvas 2 sides, whereby any interference of the air against the vertical-tension mechanisms 4 is avoided, especially while driving the truck.

The lamellar bodies 1-1' are fixed to the canvas 2 through adhering fabric strips 6, brackets 7 or sewing 8, for example, glues, webbing, etc. in a expository but not limited manner to any other suitable adhesion system.

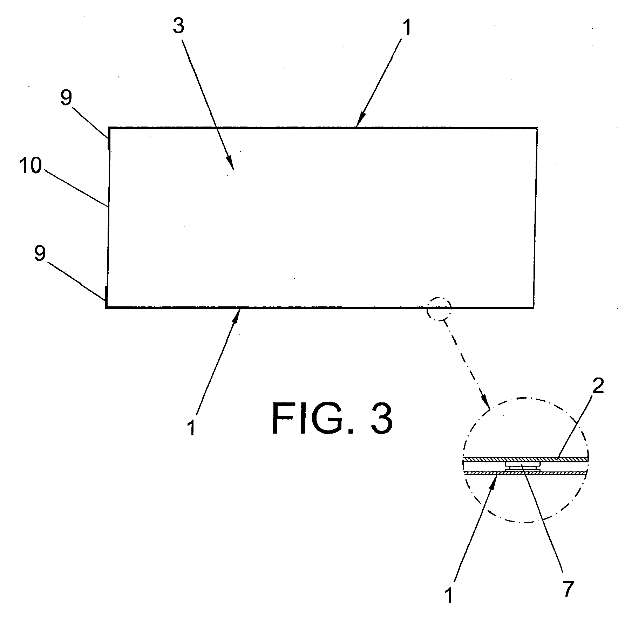

Moreover, such as shown in Figure 3, the lamellar bodies 1 have an anterior portion 9 which is attached to an area of the front wall 10 of the truck box 3 in order to better ensure the anchoring of such lamellar bodies 1, such anterior portion 9 being fixed through the aforementioned anchoring means.

In one embodiment, the lamellar bodies 1-1' can be fixed by adhering fabric strips 6 included in the outline of such lamellar bodies 1-1', such adhering fabric strips 6 being complemented with others oppositely arranged on the canvas 2.

In another embodiment, the lamellar bodies 1-1' can be bonded to the canvas 2 through one of its longitudinal edges by sewing 8 and through the rest of their outline or other areas by the adhering fabric strips 6 and/or brackets 7, for example.

## Claims

1. DEVICE FOR IMPROVING THE AERODYNAMIC COEFFICIENT APPLICABLE TO SEMI-TRAILERS CANVAS, TRUCK AND CONTAINER BOXES, including vertical-tension mechanisms arranged in alignments on both sides of the canvas covering the box of a truck, semi-trailer and container, **characterized in that** it comprises lamellar bodies (1-1') that cover and conceal the vertical-tension mechanisms (4) making up a smooth surface that follows the outer surface of the sides of the canvas (2), such lamellar bodies (1-1') being fixed to the canvas (2) through anchoring means.

2. DEVICE FOR IMPROVING THE AERODYNAMIC COEFFICIENT APPLICABLE TO SEMI-TRAILERS CANVAS, TRUCK AND CONTAINER BOXES, according to claim 1, **characterized in that** the lamellar bodies (1-1') are fixed to the canvas (2) through adhering fabric strips (6).

3. DEVICE FOR IMPROVING THE AERODYNAMIC COEFFICIENT APPLICABLE TO SEMI-TRAILERS CANVAS, TRUCK AND CONTAINER BOXES, according to claim 1, **characterized in that** the lamellar bodies (1-1') are fixed to the canvas (2) through brackets (7).

4. DEVICE FOR IMPROVING THE AERODYNAMIC COEFFICIENT APPLICABLE TO SEMI-TRAILERS CANVAS, TRUCK AND CONTAINER BOXES, according to claim 1, **characterized in that** the lamellar bodies (1-1') are fixed to the canvas (2) through one of their longitudinal edge by a sewing (8) in combination with other means selected among brackets (7) and adhering fabric strips (6), these means located at other areas of the lamellar bodies (1-1').

5. DEVICE FOR IMPROVING THE AERODYNAMIC COEFFICIENT APPLICABLE TO SEMI-TRAILERS CANVAS, TRUCK AND CONTAINER BOXES, according to claim 1, **characterized in that** the lamellar bodies (1-1') are fixed to the canvas (2) by combining the adhering fabric strips (6) and brackets (7).

6. DEVICE FOR IMPROVING THE AERODYNAMIC COEFFICIENT APPLICABLE TO SEMI-TRAILERS CANVAS, TRUCK AND CONTAINER BOXES, according to any of the preceding claims, **characterized in that** los lamellar bodies (1) are provided with an anterior portion (9) attached to an area of a front wall (10) of the truck, semi-trailer and container box (3), such anterior portion (9) being fixed through the corresponding anchoring means.
